## Europäisches Patentamt
## European Patent Office
## Office européen des brevets

(11) Veröffentlichungsnummer: **0 126 270**
**B1**

(12) # EUROPÄISCHE PATENTSCHRIFT

(45) Veröffentlichungstag der Patentschrift:
03.09.86

(51) Int. Cl.⁴: **H 02 H 1/00**

(21) Anmeldenummer: **84104057.9**

(22) Anmeldetag: **11.04.84**

(54) **Einrichtung zur optischen Erfassung von Störlichtbogenentladungen in einer gekapselten Hochspannungsschaltanlage.**

(30) Priorität: **20.05.83 CH 2777/83**

(43) Veröffentlichungstag der Anmeldung:
**28.11.84 Patentblatt 84/48**

(45) Bekanntmachung des Hinweises auf die Patenterteilung:
**03.09.86 Patentblatt 86/36**

(84) Benannte Vertragsstaaten:
**AT CH DE FR GB LI SE**

(56) Entgegenhaltungen:
**WO-A-80/01442**
**FR-A-1 151 116**
**FR-A-2 377 649**
**US-A-4 170 731**

(73) Patentinhaber: **BBC Aktiengesellschaft Brown, Boveri & Cie., Haselstrasse, CH- 5401 Baden (CH)**

(72) Erfinder: **Müri, Kurt, Dipl.- Ing., Mittelgasse 5, CH-5301 Station Siggenthal (CH)**

LIBER, STOCKHOLM 1986

## Beschreibung

Die Erfindung betrifft eine Einrichtung zur optischen Erfassung von Störlichtbogenentladungen in einer gekapselten Hochspannungsschaltanlage gemäss dem Oberbegriff des Anspruchs 1.

Bekannt ist eine solche Einrichtung z.B. aus der DE-A-28 56 188, WO-A-8 001 442. Die bekannte Einrichtung findet vornehmlich in Verbindung mit weiteren solcher Störlichtbogenerfassungseinrichtungen Verwendung zur Ortung von Störlichtbogenentladungen innerhalb einer gekapselten Hochspannungsschaltanlage mit mehreren lichtdicht gegeneinander abgeschlossenen Räumen. Mit den Störlichtbogenerfassungseinrichtungen soll festgestellt werden, in welchem der Räume sich eine Störlichtbogenentladung ausgebildet hat. Die bekannten Störlichtbogenerfassungseinrichtungen bedürfen der Anregung und Aktivierung durch eine eine Störlichtbogenentladung an beliebiger Stelle der Hochspannungsschaltanlage schnell erkennende elektronische Schutzschaltung. Gleichzeitig mit der Aktivierung der Störlichtbogenerfassungseinrichtungen erzeugt diese einen Schaltbefehl für einen Schalter, z.B. einen Leistungsschalter, in der Hochspannungsschaltanlage, um eine brennende Störlichtbogenentladung durch Stromabschaltung zu löschen. Bei der Oeffnung des Schalters entsteht über dessen Schaltstrecke eine normale Schaltlichtbogenentladung. Durch diejenige der Störlichtbogenerfassungseinrichtungen, welche dem Raum der Hochspannungsschaltanlage zugeordnet ist, welcher die Schaltstrecke des Schalters enthält, wird die Schaltlichtbogenentladung unter Beeinträchtigung der Selektivität der Ortung der Störlichtbogenentladung mit detektiert und angezeigt. Eine sich im Schalterraum vor oder auch nach der Schaltlichtbogenentladung ausbildende Störlichtbogenentladung kann neben ersterer nicht separat erfasst und angezeigt werden.

Aufgabe der Erfindung ist daher bei einer Einrichtung der eingangs genannten Art die Selektivität der Ortung von Störlichtbogenentladungen in der gekapselten Hochspannungsschaltanlage zu erhöhen. Diese Aufgabe wird erfindungsgemäss gelöst durch die im Anspruch 1 gekennzeichneten Merkmale.

Die durch die Erfindung erreichten Vorteile sind, neben der aufgabengemässen Selektivitätserhöhung, im wesentlichen darin zu sehen, dass das durch die Schaltlichtbogenentladung erzeugte Licht mit dem Lichtventil im Lichtleiter ausblendbar ist, bevor es die photoelektrische Verstärkerschaltung erreicht, wodurch diese unmittelbar nach Beendigung des Schaltvorgangs unter Beendigung der Ausblendung sofort wieder voll empfindlich ist für die Erfassung weiterer Störlichtbogenentladungen, z.B. für die Erfassung eines überlang brennenden Schaltlichtbogens.

Weitere Merkmale, bevorzugte Ausgestaltungen und Vorteile der Erfindung, wie sie auch in den abhängigen Ansprüchen gekennzeichnet sind, ergeben sich aus der nachfolgenden Beschreibung von Ausführungsbeispielen, wobei auf die Zeichnungen Bezug genommen wird.

Es zeigt:

Fig. 1 ein Blockschaltbild einer Störlichtbogenerfassungseinheit mit einem Lichtventil nach der Erfindung,

Fig. 2 in vereinfachter Darstellung ein Schnittbild einer ersten Ausführungsform des Lichtventils,

Fig. 3 eine perspektivische Darstellung des Lichtventils nach Fig. 2,

Fig. 4 ein Schnittbild einer zweiten Ausführungsform des Lichtventils und

Fig. 5 das Lichtventil nach Fig. 2 und 3 eingebaut in ein lichtdichtes Gehäuse.

In den Figuren sind übereinstimmende Teile mit übereinstimmenden Bezugszeichen versehen.

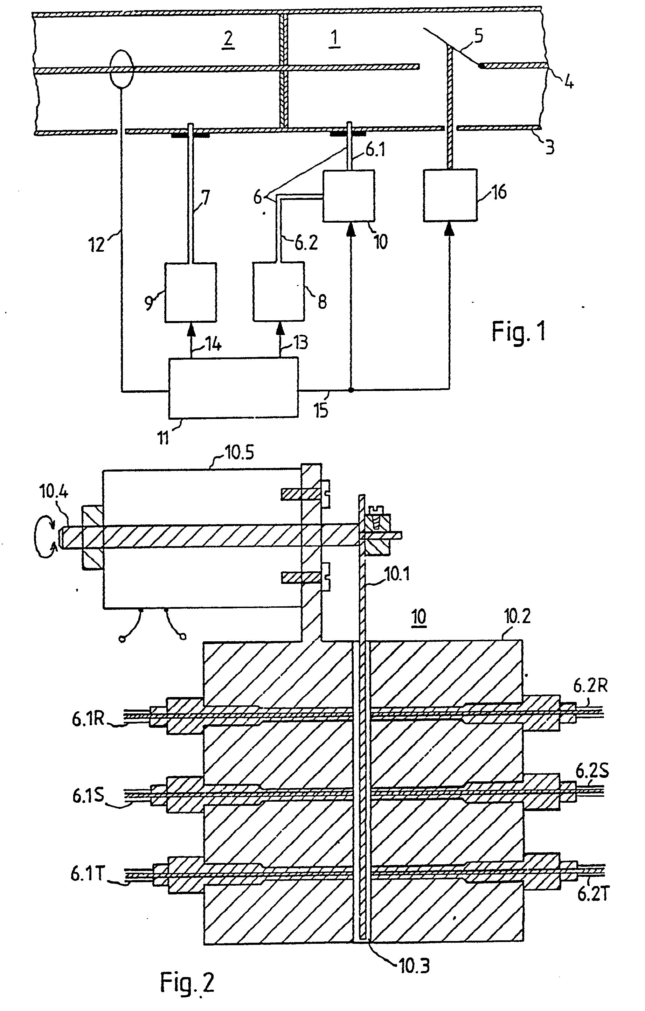

In Fig. 1 sind mit 1 und 2 zwei lichtdicht gegeneinander abgeschlossene Räume einer schematisch im Schnittbild dargestellten gekapselten Hochspannungsschaltanlage mit einem von einer metallischen Kapselung 3 eingeschlossenen Leiter 4 bezeichnet. In dem mit 1 bezeichneten Raum ist ein Leistungsschalter 5 angeordnet. Aus dem Raum 1 und dem Raum 2 führen Lichtleiter 6 und 7 jeweils zu einer photoelektrischen Verstärkerschaltung 8 und 9. Im Lichtleiter 6, welcher aus dem mit 1 bezeichneten Raum hersusführt, welcher den Leistungsschalter 5 enthält, ist ein elektrisch steuerbares Lichtventil 10 angeordnet. Mit 11 ist ein elektronisches Schutzsystem bezeichnet, welchem beispielsweise über eine Leitung 12 der im Leiter 4 in der Hochspannungsschaltanlage fliessende Strom als Eingangsgrösse zugeführt ist. Das elektronische Schutzsystem muss in der Lage sein, Störlichtbogenentladungen sehr schnell, z.B. innerhalb einiger Millisekunden, zu erkennen. Solche Schutzsysteme sind in vielfachen Ausgestaltungen bekannt und brauchen deshalb hier im einzelnen nicht näher beschrieben zu werden. Ueber Ausgänge 13 und 14 steht das Schutzsystem 11 mit den photoelektrischen Verstärkerschaltungen 8 und 9 in Steuerverbindung und über einen Ausgang 15 mit einer Betätigungsvorrichtung 16 für den Leistungsschalter 5 sowie dem Lichtventil 10.

Tritt innerhalb der Kapselung der Hochspannungsschaltanlage, beispielsweise zwischen dem Leiter 4 und der Kapselung 3 im Raum 2 eine Störlichtbogenentladung auf, so spricht das elektronische Schutzsystem 11 an und aktiviert über seine Ausgänge 13 und 14 die photoelektrischen Verstärkerschaltungen 8 und 9. Diese weisen als photoelektrische Elemente z.B. Photodioden auf, welchen zur Erreichung einer hohen Lichtempfindlichkeit ladungsempfindliche, integrierende Verstärkerschaltungen nachgeschaltet sind. Gleichzeitig mit der Aktivierung der photoelektrischen Verstärkerschaltungen 8 und 9 erzeugt das Schutzsystem 11 an seinem Ausgang 15 ein Schaltsignal für die Betätigungsvorrichtung 16, durch welche dann der Leistungsschalter 5 geöffnet wird, um die Störlichtbogenentladung durch Stromabschaltung zum Erlöschen zu bringen. Die Eigenzeit des Leistungsschalters, d.h. die Zeit zwischen dem Auftreten des Schaltsignals und dem tatsächlichen Beginn der Schalthandlung des Leistungsschalters 5, beträgt etwa 20 msec, innerhalb derer die Störlichtbogenerfassungseinrichtungen 6, 8 und 7, 9 die Störlichtbogenentladung orten können. Mit dem Beginn der Schalthandlung zündet über der Schaltstrecke des Leistungsschalters 5 eine Schaltlichtbogenentladung. Schaltlichtbogenentladungen sind in der Regel mit einer hohen Lichtintensität verbunden und würden im Beispiel von Fig. 1 von der Störlichtbogenerfassungseinheit 6, 8 mit Sicherheit erfasst werden. Im Ergebnis würde also sowohl im Raum 1 als auch im Raum 2 eine Lichtbogenentladung angezeigt werden. Für den Fall, dass sich die Störlichtbogenentladung ursprünglich im Raum 1 ausgebildet hätte, würde zwar nur die diesem Raum zugeordnete Störlichtbogenerfassungseinrichtung 6, 8 eine Lichtbogenentladung anzeigen, jedoch liesse sich nicht erkennen, ob diese Anzeige ursprünglich von der Störlichtbogenentladung oder ausschliesslich von der Schaltlichtbogenentladunge verursacht wurde. Um Doppelanzeigen dieser Art im Sinne einer besseren Selektivität der Störlichtbogenentladungsortung zu vermeiden, wird nach der Erfindung das von der Schaltlichtbogenentladung herrührende Licht mit dem Lichtventil 10 ausgeblendet. Zur zeitlichen Korrelation der Ausblendezeit mit der Schaltlichtbogenentladung, ist dem Lichtventil 10 ebenfalls das Schaltsignal zugeführt. Vorzugsweise wird mit der Ausblendung nach dem Auftreten des Schaltsignals jedoch erst nach der Eigenzeit des Leistungsschalters begonnen und die Ausblendung nach Ablauf einer für eine normale Schalthandlung notwendigen Zeit sofort wieder beendet. Dadurch können in vorteilhafter Weise Störlichtbogenentladungen, welche unmittelbar vor Beginn oder nach dem Erlöschen der Schaltlichtbogenentladung brennen, z.B. auch eine überlang brennende Schaltlichtbogenentladung, erfasst und selektiv angezeigt werden. Wesentlich für die Erfassung einer Störlichtbogenentladung unmittelbar im Anschluss an das Erlöschen der . Schaltlichtbogenentladung ist, dass das Licht der Schaltlichtbogenentladung vor der photoelektrischen Verstärkerschaltung 8 ausgeblendet wird. Würde es diese nämlich erreichen, so würde es in dieser so viele Photoelektronen freisetzen, dass deren Abbau nur innerhalb einer vergleichsweise langen Zeit von der Grössenordnung 1 sec möglich ist, innerhalb welcher die photoelektrische Verstärkerschaltung praktisch lichtunempfindlich ist. Man bezeichnet eine solche Zeit auch als Totzeit.

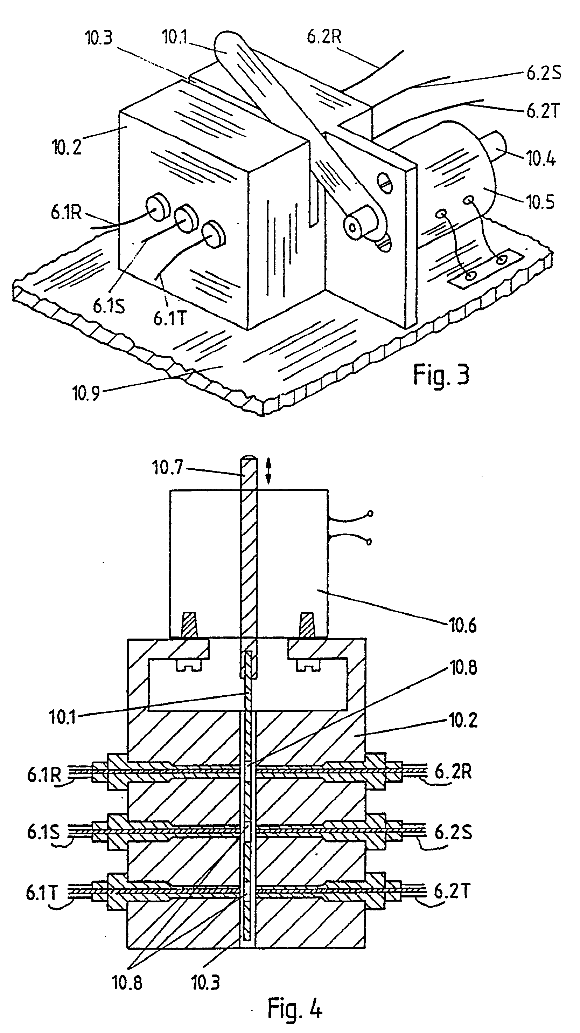

In Fig. 2 ist eine erste Ausführungsform des Lichtventils 10 in einem Schnittbild vereinfacht dargestellt. Fig. 3 zeigt die gleiche Ausführungsform des Lichtventils 10 jedoch in perspektivischer Darstellung. Die gewählte Ausführungsform ist dreiphasig ausgestaltet, d.h. es können drei Lichtleiter gleichzeitig unterbrochen werden. In der praktischen Anwendung sind die drei Lichtleiter üblicherweise den Phasen R, S, T eines dreiphasigen Drehstromsystems zugeordnet. Die Lichtleiter sind im Lichtventil 10 durch einen Luftspalt in jeweils einen eingangsseitigen 6.1R, 6.1S, 6.1T und einen ausgangsseitigen Teil 6.2R, 6.2S, 6.2T unterbrochen. Der Luftspalt ist durch eine bewegliche Blende 10.1 abblendbar. Am Luftspalt stehen sich die eingangs- und ausgangsseitigen Teile des jeweils gleichen Lichtleiters mit zueinander senkrechten, planparallelen und polierten Stirnflächen genau gegenüber und sind dort gehaltert in Passlöchern in einem etwa quaderförmigen Blendenblock 10.2. Senkrecht zu den Passlöchern weist der Blendenblock 10.2 etwa in seiner Mitte einen Schlitz 10.3 auf, welcher die Passlöcher durchschneidet. Die Lichtleiterteile 6.1R, 6.2R, 6.1S, 6.2S, 6.1T, 6.2T sind in die Passlöcher von beiden Seiten soweit eingesteckt, dass ihre Stirnflächen exakt mit den Schlitzwänden abschliessen. Durch die Weite des Schlitzes 10.3 ist somit die Weite des Luftspaltes bestimmt, welche nur etwa einen Millimeter zu betragen braucht. Die Schlitzwände sind vorzugsweise mattschwarz ausgebildet, um ein Ueberkoppeln zwischen den drei Lichtleitern optimal zu unterdrücken. Die in den Blendenblock 10.2 eingesteckten Teile der Lichtleiter 6.1R, 6.2R, 6.1S, 6.2S, 6.1T, 6.2T sind mit Vorteil als Stecker ausgebildet. Die Blende 10.1 ist eine ebene längliche Platte, deren Dicke etwas geringer als die Weite des Schlitzes 10.3 ist, um in diesem leicht beweglich zu sein. Die bewegliche Führung der Blende 10.1 ist grundsätzlich auf verschiedene Arten möglich. Im Ausführungsbeispiel nach Fig. 2 ist die Blende nach Art eines Flügels senkrecht an der Achse 10.4 eines Drehmagneten 10.5 befestigt. Der Drehmagnet ist ein Elektromagnet. Er ist weiter mit dem Blendenblock 10.2 fest verbunden. Er weist intern eine Rückstellfeder auf, welche die Achse 10.4 an einem ersten Anschlag in einer ersten Drehstellung hält, sofern im Drehmagnet 10.5 kein Magnetisierungsstrom fliesst. In dieser Drehstellung ist der Luftspalt zwischen den Lichtleiterteilen 6.1R und 6.2R, 6.1S und 6.2S, 6.1T und 6.2T im Schlitz 10.3 des Blendenblocks 10.2 durch die Blende 10.1 nicht abgeblendet. Dagegen ist bei fliessendem Magnetisierungsstrom im Drehmagneten 10.5 die Blende 10.1 in den Schlitz 10.3 hineingedreht und schlägt vorzugsweise an dessen Sohle an.

Selbstverständlich kann anstelle eines Drehmagneten auch ein Hub- oder Stossmagnet mit einem in seiner Längsrichtung beweglichen Anker verwendet werden. Diese Ausführungsform ist in Fig. 4 wiederum als Schnittbild dargestellt, welches dem von Fig. 2 im wesentlichen gleicht. Der Hub- oder Stossmagnet ist mit 10.6 bezeichnet und sein beweglicher Anker mit 10.7. An letzterem ist die Blende 10.1 befestigt. Um die Blende 10.1 nicht vollständig aus dem Schlitz 10.3 heraus- oder in diesen hineinbewegen zu müssen, kann diese mit Löchern 10.8 versehen sein.

Der Blendenblock 10.2 ist, wie in Fig. 3 zu erkennen, auf einer Platte, vorzugsweise einer Leiterplatte 10.9 befestigt, welche gleichzeitig als Trägerplstte für eine dem Dreh- bzw. dem Hub- oder Stossmagneten vorgeschaltete Steuer- und Verstärkerschaltung dienen kann.

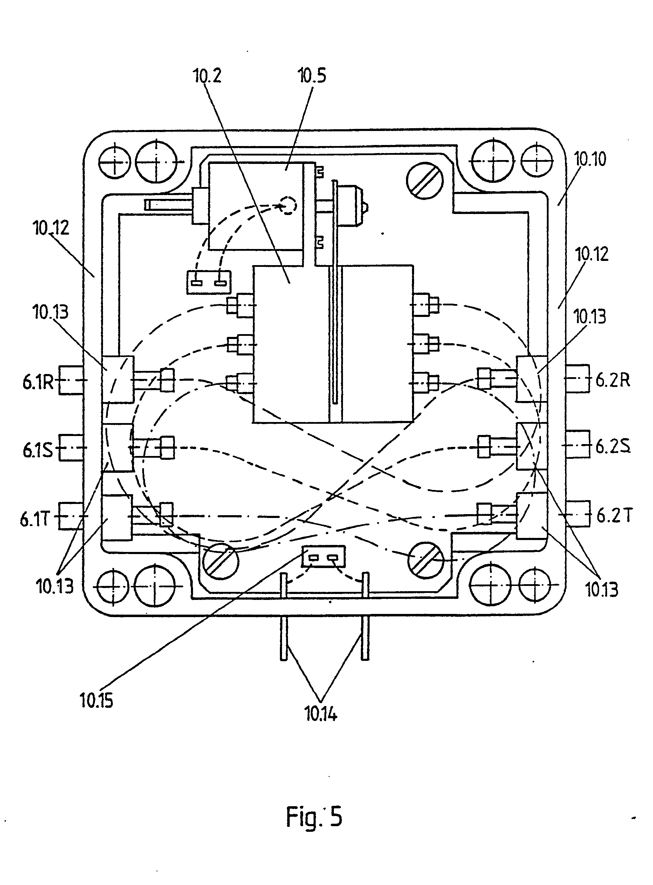

Fig. 5 zeigt das Lichtventil 10 in der Ausführungsform mit dem Drehmagneten 10.5 eingebaut in einem mit einem Deckel verschliessbaren lichtdichten Gehäuse 10.10. Dargestellt ist der Blick in das offene Gehäuse 10.10 bei abgenommenem Deckel. In zwei gegenüberliegenden Seitenwänden 10.11 und 10.12 des Gehäuses 10.10 sind Lichtleiterdurchführungen 10.13 vorgesehen. Auf diese sind von aussen die Lichtleiter 6.1R, 6.2R, 6.1S, 6.2S, 6.1T, 6.2T aufgesteckt. Im Gehäuse 10.10 sind die genannten Lichtleiter durch kurze, nur strichliert dargestellte Lichtleiterstücke zum Blendenblock 10.2 weitergeführt. Das Gehäuse 10.10 weist weiter noch elektrische Durchführungskontskte 10.14 auf, welche ebenfalls als Steckkontakte ausgeführt sind und über welche z.B. das Schaltsignal für den Dreh- bzw. den Hub- oder Stossmagneten in das Gehäuse 10.10 eingeführt werden kann. Die Durchführungskontakte 10.14 sind im Gehäuse 10.10 beispielsweise mit Lötpunkten 10.15 auf der Leiterplatte 10.9 elektrisch verbunden, von denen nicht dargestellte Leiterbshnen zu ebenfslls nicht dargestellten elektrischen Bauteilen führen.

**Patentansprüche**

1. Einrichtung zur optischen Erfassung von Störlichtbogenentladungen in einer gekapselten Hochspannungsschsltanlage mit mindestens einem Lichtleiter (6, 7), durch welchen das Störlicht aus der Kapselung (3) heraus mindestens einer photoelektrischen Verstärkerschaltung (8, 9) zugeführt ist, dadurch gekennzeichnet, dßs zur Ausblendung von bei Schaltvorgängen in der Hochspannungsschaltanlage auftretenden Schaltlichtbogenentladungen im Lichtleiter (6) ein in Funktion vom Schaltvorgang steuerbares Lichtventil (10) angeordnet ist.

2. Einrichtung nach Anspruch 1, dadurch gekennzeichnet, dass der Lichtleiter (6) im Lichtventil (10) durch einen Luftspalt in einen eingangsseitigen (6.1) und einen ausgangsseitigen Teil (6.2) unterbrochen ist und der Luftspalt durch ein steuerbares Abblendorgan (10.1) abblendbar ist.

3. Einrichtung nach Anspruch 2, dadurch gekennzeichnet, dass der eingangsseitige (6.1) dem ausgangsseitigen Teil (6.2) des Lichtleiters (6) am Luftspalt genau gegenüber angeordnet ist, beide Teile (6.1, 6.2) zueinander planparallele, polierte Stirnflächen aufweisen und von beiden Seiten in ein durchgehendes Passloch in einem Blendenblock (10.2) gesteckt sind, welcher einen zum Passloch senkrechten und das Passloch im Luftspalt durchschneidenden ebenen Schlitz (10.3) aufweist, dessen Weite etwa der Weite des Luftspaltes entspricht.

4. Einrichtung nach einem der Ansprüche 2 oder 3, dadurch gekennzeichnet, dass das steuerbare Abblendorgan (10.1) eine mittels eines Elektromagneten (10.5, 10.6) in den Luftspalt bewegliche Blende ist.

5. Einrichtung nach Anspruch 4, dadurch gekennzeichnet, dass der Elektromagnet (10.5, 10.6) mit dem Blendenblock (10.2) fest verbunden und die Blende wenigstens teilweise als ebene, im Schlitz (10.3) des Blendenblocks (10.2) und in den Luftspalt bewegliche Platte ausgebildet ist.

6. Einrichtung nach einem der Ansprüche 4 oder 5, dadurch gekennzeichnet, dass der Elektromagnet (10.5, 10.6) als Hub- oder Stossmagnet (10.6) mit einem mit einer Rückstellfeder versehenen beweglichen Anker (10.7) ausgebildet ist, an welchem die Blende befestigt ist.

7. Einrichtung nach einem der Ansprüche 4 oder 5, dadurch gekennzeichnet, dass der Elektromagnet (10.5, 10.6) als Drehmagnet (10.5) mit einer mit einer Rückstellfeder versehenen Drehachse (10.4) ausgebildet ist, an welcher die Blende in der Art eines Flügels befestigt ist.

8. Einrichtung nach einem der Ansprüche 6 oder 7, dadurch gekennzeichnet, dass der Blendenblock (10.2) auf einer Leiterplatte (10.9) befestigt ist, welche gleichzeitig Trägerplatte für eine dem Elektromagneten (10.5, 10.6) vorgeschaltete Steuer- und Verstärkerschaltung ist.

9. Einrichtung nach einem der Ansprüche 1 bis 8, dadurch gekennzeichnet, dass das Lichtventil (10) von einem äusseren lichtdichten Gehäuse (10.10) eingeschlossen ist, in welches hinein und aus welchem heraus der Lichtleiter (6) sowie elektrische Steurleitungen (15) mittels vorzugsweise als Steckverindungen ausgebildeter Durchführungen geführt sind.

10. Einrichtung nach einem der Ansprüche 1 bis 9, dadurch gekennzeichnet, dass das Lichtventil (10) zur gleichzeitigen Unterbrechung mehrerer paralleler Lichtleiter (6.1R, 6.1S, 6.1T) ausgebildet ist, indem im Blendenblock (10.2) nebeneinander eine entsprechende Anzahl von Passlöchern und am Gehäuse (10.10) eine entsprechende Anzahl von Lichterleiterdurchführungen (10.13) vorgesehen sind.

## Claims

1. Arrangement for the optical detection of extraneous arc discharges in an enclosed high-tension switching system having at least one light guide (6, 7), through which the extraneous light is conducted out of the casing (3) to at least one photoelectric amplifier circuit (8, 9), characterised in that a light valve (10) which is controllable in dependence upon the switching operation is disposed in the light guide (6) for the masking of switch arc discharges occurring in the high-tension switching system in the course of switching operations.

2. Arrangement according to Claim 1, characterised in that the light guide (6) is subdivided in the light valve (10) by an air gap into a component on the input side (6.1) and a component on the output side (6.2), and the air gap can be masked by a controllable masking element (10.1).

3. Arrangement according to Claim 2, characterised in that the component on the input side (6.1) is disposed precisely opposite the component on the output side (6.2) of the light guide (6) at the air gap, both components (6.1, 6.2) have polished end faces which are plane-parallel to one another and are inserted from both sides into a continuous fitting aperture in a diaphragm block (10.2), which includes a flat slit (10.3), which is perpendicular to the fitting aperture and which intersects the fitting aperture in the air gap and the width of which approximately corresponds to the width of the air gap.

4. Arrangement according to either of Claims 2 or 3, characterised in that the controllable masking element (10.1) is a mask which can be moved by means of an electromagnet (10.5, 10.6) into the air gap.

5. Arrangement according to Claim 4, characterised in that the electromagnet (10.5, 10.6) is fixedly connected with the diaphragm block (10.2), and the mask is constructed at least in part as a flat plate which can be moved in the slit (10.3) of the diaphragm block (10.2) and into the air gap.

6. Arrangement according to either of Claims 4 or 5, characterised in that the electromagnet (10.5, 10.6) is constructed as a lifting or thrust magnet (10.6) with a movable armature (10.7), which is provided with a restoring spring and at which the mask is secured.

7. Arrangement according to either of Claims 4 or 5, characterised in that the electromagnet (10.5, 10.6) is constructed as a rotary magnet (10.5) with a rotary shaft (10.4), which is provided with a restoring spring and at which the mask is secured in the manner of a vane.

8. Arrangement according to either of Claims 6 or 7, characterised in that the diaphragm block (10.2) is secured on a circuit board (10.9), which is at the same time the supporting board for a control and amplifier circuit connected to precede the electromagnet (10.5, 10.6).

9. Arrangement according to any of Claims 1 to 8, characterised in that the light valve (10) is enclosed by an external light-tight housing (10.10), into which and out of which the light guide (6) as well as electrical control leads (15) are guided by means of ducts which are preferably constructed as plug connections.

10. Arrangement according to any of Claims 1 to 9, characterised in that the light valve (10) is designed for the simultaneous interruption of a plurality of parallel light guides (6.1R, 6.1S, 6.1T), in that a corresponding number of fitting apertures are provided alongside one another in the diaphragm block (10.2) and a corresponding number of light guide ducts (10.13) are provided at the housing (10.10).

## Revendications

1.- Dispositif pour la détection optique de décharges en arc de defaut dans une installation de commutation à haute tension blindée comportant au moins un conducteur optique (6, 7) par lequel la lumière de défaut sortant du blindage (3) est amenée à au moins un circuit amplificateur photo-électrique (8, 9), caractérisé en ce que, pour occulter les décharges en arc de commutation apparaissant, lors d'opérations de commutation dans l'installation de commutation à haute tension, une valve optique (10) dont le fonctionnement peut être commandé par l'opération de commutation est montée dans le conducteur optique (6).

2.- Dispositif suivant la revendication 1, caractérisé en ce que dans la valve optique (10), le conducteur optique (6) est interrompu par un intervalle d'air en une partie située du côté d'entrée (6.1) et une partie située du côté de sortie (6.2) et l'intervalle d'air peut être occulté par un organe d'occultation (10.1) pouvant être commandé.

3.- Dispositif suivant la revendication 2, caractérisé en ce que la partie (6.1) du conducteur optique (6) située du côté d'entrée est opposée avec précision, au niveau de l'intervalle d'air, à la partie (6.2) située du côté de sortie, les deux parties (6.1, 6.2) présentent des faces d'about polies, planes et parallèles l'une à l'autre, et sont insérées des deux côtés dans un trou ajusté de traversée dans un bloc occulteur (10.2) qui présente une fente plane (10.3) perpendiculaire au trou ajusté et intersectant ce trou ajusté dans l'intervalle d'air, la largeur de cette fente correspondant à peu près à la largeur de l'intervalle d'air.

4.- Dispositif suivant la revendication 2 ou 3, caractérisé en ce que l'organe oc ulteur (10.1) pouvant être commandé est un écran pouvant être déplacé dans l'intervalle d'air à l'intervention d'un electro-aimant (10.5, 10.6).

5.- Dispositif suivant la revendication 4, caractérisé en ce que l'électro-aimant (10.5, 10.6) est relié rigidement au bloc occulteur (10.2) et l'écran a au moins partiellement la forme d'une plaque plane mobile dans la fente (10.3) du bloc occulteur (10.2) et dans l'intervalle d'air.

6.- Dispositif suivant la revendication 4 ou 5, caractérisé en ce que l'électro-aimant (10.5, 10.6) a la forme d'un aimant de levée ou de poussée (10.6) avec une armature mobile (10.7) pourvue d'un ressort de rappel et à laquelle l'écran est fixe.

7.- Dispositif suivant la revendication 4 ou 5, caractérisé en ce que l'électro-aimant (10.5, 10.6) a la forme d'un aimant tournant (10.5) comportant un axe de rotation (10.4) pourvu d'un ressort de rappel auquel est fixé l'écran ayant la forme d'une aile.

8.- Dispositif suivant la revendication 6 ou 7, caractérisé en ce que le bloc occulteur (10.2) est fixé sur une plaquette à circuits imprimés (10.9) qui est simultanément une plaque de support pour un circuit de commande et d'amplification précédant l'électro-aimant (10.5, 10.6).

9.- Dispositif suivant l'une quelconque des revendications 1 à 8, caractérisé en ce que la valve optique (10) est enfermée dans un boîtier extérieur étanche à la lumière (10.10) dans lequel et hors duquel les conducteurs optiques (6) ainsi que les lignes de commande électriques (15) sont amenés au moyen de traversées ayant la forme de préférence de connexions enfichées.

10.- Dispositif suivant l'une quelconque des revendications 1 à 9, caractérisé en ce que la valve optique (10) est prevue pour interrompre simultanément plusieurs conducteurs optiques parallèles (6.1R, 6.1S, 6.1T) par le fait que, dans le bloc occulteur (10.2), un nombre corréspondant de trous ajustes et, dans le boîtier (10.10), un nombre correspondant de traversées de conducteurs optiques (10.13) sont prévus l'un à côté de l'autre.

Fig. 1

Fig. 2

1

0 126 270

Fig. 3

Fig. 4

Fig. 5